# EUROPEAN PATENT APPLICATION

(11) **EP 4 811 126 A1**
(43) Date of publication of application: **23.09.2026**
(21) Application number: 24906108.6
(22) Date of filing: 05.12.2024
(51) Int. Cl.: G06F 9/451, G10L 15/22, G06F 3/04817, G06F 3/04845

(54) **INSTRUCTION PROCESSING METHOD AND APPARATUS, AND ELECTRONIC DEVICE**

(30) Priority: 20.12.2023 CN 202311760939
(71) Applicant: Great Wall Motor Company Limited, Baoding, Hebei 071000 (CN)
(72) Inventor: WANG, Kang, Baoding, Hebei 071000 (CN); ZHOU, Jiaqi, Baoding, Hebei 071000 (CN)
(74) Representative: Michalski Hüttermann & Partner mbB
(86) International application number: PCT/CN2024/136953
(87) International publication number: WO 2025/130624

(57) **Abstract**

Provided in the present application are an instruction processing method and apparatus, and an electronic device. The method comprises: receiving a user operation instruction in the process of executing a voice interaction operation; if the user operation instruction can be executed simultaneously with a voice interaction function, in response to the user operation instruction, executing a target operation corresponding to the user operation instruction; controlling the voice interaction function to operate in a delayed listening state; and after switching to the delayed listening state is successful, receiving a user voice instruction within a preset delayed listening time, and performing the voice interaction operation in response to the user voice instruction. That is, in the present application, if a voice interaction operation and another user operation are simultaneously present, the two operations are simultaneously executed when simultaneous execution of the two operations is available, thereby improving the user experience. Furthermore, if no user voice instruction is received within a preset delayed listening time, resources occupied by a voice interaction function are released, so as to avoid the situation where another operation cannot be correctly executed due to unavailability of resources caused by resource occupation by the voice interaction function, thereby improving the user experience.

## Description

The present disclosure claims the priority to Chinese patent application No. 202311760939.3, entitled "INSTRUCTION PROCESSING METHOD AND APPARATUS, AND ELECTRONIC DEVICE", filed on December 20, 2023 with the China National Intellectual Property Administration, which is incorporated herein by reference in its entirety.

### TECHNICAL FIELD

The present disclosure relates to the field of data processing, and in particular, to a method and an apparatus for instruction processing, and an electronic device.

### BACKGROUND

With the continuous development of vehicle technology, a vehicle not only provides an original driving function but also offers intelligent functions, such as a music playback function and a navigation function.

If a user wants to execute a certain function, it may be achieved through a touch operation. At this time, the vehicle responds to the touch operation of the user. For example, if the user wants to play music and clicks a music playback button, the music playback operation is performed at this time.

However, currently, when responding to a user operation, the vehicle only supports one type of user operation. If the user outputs multiple user operations simultaneously, the vehicle cannot correctly respond to the user operations, which degrades user experience.

### SUMMARY

In view of this, the present disclosure provides a method and an apparatus for instruction processing, and an electronic device to solve the problem that when a user outputs multiple user operations simultaneously, the response to user operations cannot be correctly executed, which degrades user experience.

To solve the above technical problem, the present disclosure adopts the following technical solution.

A method for instruction processing, including:
determining, in response to receiving a user operation instruction during a voice interaction operation, whether the user operation instruction is executable during activation of a voice interaction function, where the voice interaction function is used to enable the voice interaction operation;
in response to determining that the user operation instruction is executable during the activation of the voice interaction function, performing a target operation corresponding to the user operation instruction as a response to the user operation instruction;
   switching an operating state of the voice interaction function to a delayed listening state;
   determining whether a user voice instruction is received within a preset delayed listening time after the operating state of the voice interaction function is switched to the delayed listening state;
   performing, in response to receiving the user voice instruction within the preset delayed listening time, the voice interaction operation as a response to the user voice instruction; and
   performing, in response to not receiving the user voice instruction within the preset delayed listening time, a function exit operation that deactivates the voice interaction function.

In an embodiment, where determining whether the user operation instruction is executable during the activation of the voice interaction function includes:
determining a target function corresponding to the user operation instruction;
obtaining a pre-configured function set, where the function set includes a subset of functions that are not mutually exclusive, where the subset of functions that are not mutually exclusive includes a function that is executable during the activation of the voice interaction function;
determining whether the subset of functions that are not mutually exclusive includes the target function; and
determining, in response to the subset of functions that are not mutually exclusive including the target function, that the user operation instruction is executable during the activation of the voice interaction function.

In an embodiment, the method further includes:
in response to determining that the user operation instruction is not executable during the activation of the voice interaction function:
performing the target operation corresponding to the user operation instruction as the response to the user operation instruction, and performing the function exit operation that deactivates the voice interaction function.

In an embodiment, a subset of functions that are mutually exclusive includes a function that is not executable during the activation of the voice interaction function; and
where determining that the user operation instruction is not executable during the activation of the voice interaction function includes:
determining, in response to the subset of functions that are mutually exclusive including a target function corresponding to the user operation instruction, that the user operation instruction is not executable during the activation of the voice interaction function.

In an embodiment, before performing the target operation corresponding to the user operation instruction as the response to the user operation instruction, the method further includes:
adjusting attribute information of a display box for voice interaction.

In an embodiment, adjusting the attribute information of the display box for voice interaction includes:
resizing the display box for voice interaction; and
adjusting a display position of the resized display box for voice interaction to a specified display position.

In an embodiment, switching the operating state of the voice interaction function to the delayed listening state includes:
obtaining an identifier representing the delayed listening state; and
adjusting content representing the operating state of the voice interaction function to be the identifier.

In an embodiment, determining whether the user voice instruction is received within the preset delayed listening time includes:
collecting, within the preset delayed listening time, user voice;
performing intent recognition on the user voice; and
determining, in response to a preset intent recognition result being obtained from the intent recognition, that the user voice instruction is received.

An apparatus for instruction processing, including:
an instruction determination module, configured to determine, in response to receiving a user operation instruction during a voice interaction operation, whether the user operation instruction is executable during activation of a voice interaction function, where the voice interaction function is used to enable the voice interaction operation;
an instruction response module, configured to, in response to determining that the user operation instruction is executable during the activation of the voice interaction function, perform a target operation corresponding to the user operation instruction as a response to the user operation instruction;
a voice control module, configured to switch an operating state of the voice interaction function to a delayed listening state;
a voice reception determination module, configured to determine whether a user voice instruction is received within a preset delayed listening time after the operating state of the voice interaction function is switched to the delayed listening state; and
a voice processing module, configured to perform, in response to receiving the user voice instruction within the preset delayed listening time, the voice interaction operation as a response to the user voice instruction; and perform, in response to not receiving the user voice instruction within the preset delayed listening time, a function exit operation that deactivates the voice interaction function.

An electronic device, including: a memory and a processor;
where the memory is used to store a program; and
the processor invokes the program to perform the method for instruction processing described above.

Compared with the related art, the present disclosure has the following beneficial effects.

The present disclosure provides a method and an apparatus for instruction processing, and an electronic device. In the present disclosure, in response to receiving a user operation instruction during a voice interaction operation, whether the user operation instruction is executable during activation of a voice interaction function is determined. In response to determining that the user operation instruction is executable during the activation of the voice interaction function, it indicates that the user operation and the voice interaction can be executed simultaneously. Then, a target operation corresponding to the user operation instruction is performed as a response to the user operation instruction. An operating state of the voice interaction function is switched to a delayed listening state. Whether a user voice instruction is received within a preset delayed listening time is determined after the operating state of the voice interaction function is switched to the delayed listening state. In response to receiving the user voice instruction within the preset delayed listening time, the voice interaction operation is performed as a response to the user voice instruction. That is, through the present disclosure, if a voice interaction operation and another user operation exist simultaneously, in response to the two operations being executable simultaneously, the two operations are executed simultaneously, which improves user experience. Further, if the user voice instruction is not received within the preset delayed listening time, it indicates that the user no longer needs the voice interaction operation. At this time, a function exit operation that deactivates the voice interaction function is performed, thereby releasing resources occupied by the voice interaction function, avoiding a situation where other operations cannot be correctly executed due to a lack of resources caused by the occupation of resources by the voice interaction function, and improving user experience.

### BRIEF DESCRIPTION OF THE DRAWINGS

In order to more clearly illustrate the technical solutions in the embodiments of the present disclosure or in the related art, the drawings required for describing the embodiments or the related art would be introduced briefly below. The drawings in the following description are only some embodiments of the present disclosure. For those of ordinary skill in the art, other drawings can also be obtained based on these drawings without creative work.
FIG. 1 is a method flowchart of a method for instruction processing according to an embodiment of the present disclosure;
FIG. 2 is a method flowchart of an instruction mutual exclusion analysis according to an embodiment of the present disclosure;
FIG. 3 is a method flowchart of another method for instruction processing according to an embodiment of the present disclosure; and
FIG. 4 is a structural schematic diagram of an apparatus for instruction processing according to an embodiment of the present disclosure.

### DETAILED DESCRIPTION OF THE EMBODIMENTS

The technical solutions in the embodiments of the present disclosure would be described clearly and completely below with reference to the drawings in the embodiments of the present disclosure. The described embodiments are only some of the embodiments of the present disclosure, rather than all of the embodiments. Based on the embodiments in the present disclosure, all other embodiments obtained by those of ordinary skill in the art without creative work shall fall within the protection scope of the present disclosure.

With the continuous development of vehicle technology, a vehicle not only provides an original driving function but also offers intelligent functions, such as a music playback function and a navigation function.

If a user wants to execute a certain function, it may be achieved through a touch operation. At this time, the vehicle responds to the touch operation of the user. For example, if the user wants to play music and clicks a music playback button, the music playback operation is performed at this time.

However, currently, when responding to a user operation, the vehicle only supports one type of user operation. If the user outputs multiple user operations simultaneously, such as performing a voice interaction operation and a touch operation simultaneously, the vehicle would receive two operation instructions simultaneously. However, the vehicle is not configured with a strategy for responding to the two operation instructions. At this time, the vehicle cannot correctly respond to the user operations, which degrades user experience.

Therefore, the present disclosure performs different strategies based on whether multiple received instructions, such as two instructions (a voice interaction instruction and a touch instruction), are executable simultaneously. If the two instructions are executable simultaneously, both instructions are responded to simultaneously. If the two instructions are not executable simultaneously, the touch operation received during the voice interaction operation is responded to.

The present disclosure provides a method and an apparatus for instruction processing, and an electronic device. In the present disclosure, in response to receiving a user operation instruction during a voice interaction operation, whether the user operation instruction is executable during activation of a voice interaction function is determined. In response to determining that the user operation instruction is executable during the activation of the voice interaction function, it indicates that the user operation and the voice interaction can be executed simultaneously. Then, a target operation corresponding to the user operation instruction is performed as a response to the user operation instruction. An operating state of the voice interaction function is switched to a delayed listening state. Whether a user voice instruction is received within a preset delayed listening time is determined after the operating state of the voice interaction function is switched to the delayed listening state. In response to receiving the user voice instruction within the preset delayed listening time, the voice interaction operation is performed as a response to the user voice instruction. That is, through the present disclosure, if a voice interaction operation and another user operation exist simultaneously, in response to the two operations being executable simultaneously, the two operations are executed simultaneously, which improves user experience. Further, if the user voice instruction is not received within the preset delayed listening time, it indicates that the user no longer needs the voice interaction operation. At this time, a function exit operation that deactivates the voice interaction function is performed, thereby releasing resources occupied by the voice interaction function, avoiding a situation where other operations cannot be correctly executed due to a lack of resources caused by the occupation of resources by the voice interaction function, and improving user experience.

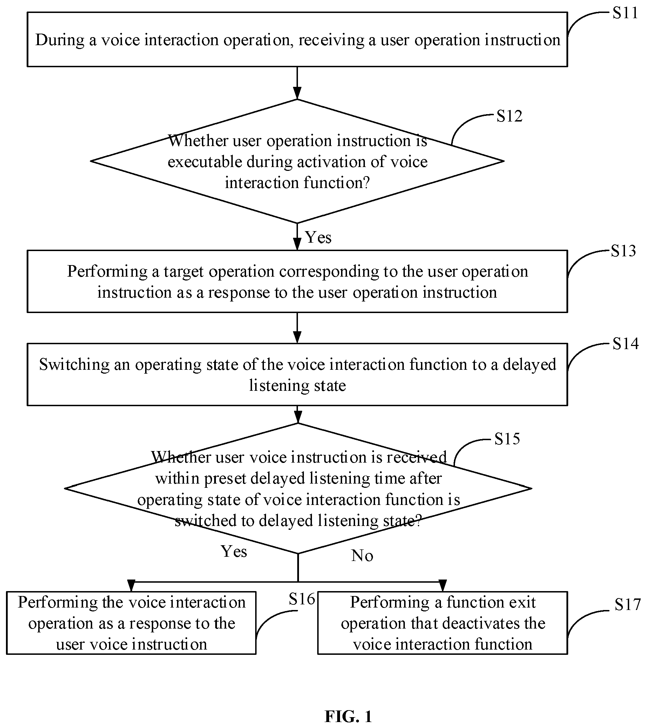

Based on the above, an embodiment of the present disclosure provides a method for instruction processing, which is applied to an electronic device. Referring to FIG. 1, the method for instruction processing may include the following steps.

In S11, during a voice interaction operation, a user operation instruction is received.

In practical applications, the application scenario in the present disclosure may be, such as a navigation scenario. In the navigation scenario, the user may interact with the electronic device, such as selecting a destination by voice, or selecting a navigation route, etc.

If the electronic device receives a voice control instruction output by the user, an operation corresponding to the voice control instruction is performed. If it is during the response to the voice control instruction of the user, such as when receiving the voice control instruction of the user or performing the operation corresponding to the voice control instruction, the user may perform a manual touch operation.

In the navigation scenario, the manual touch operation of the user may be, for example, clicking a button such as team formation, return to parking spot, pin point, toolbox, and search entrance. The function button supported by navigation in the embodiment of the present disclosure may be configured based on actual needs.

If the user clicks a certain button, the user operation instruction is received at this time, and it is required to determine whether to respond to the user operation instruction during the voice interaction.

The above embodiment takes the navigation scenario as an example. The present disclosure may also be applied to other scenarios. For example, during a voice dialogue with the user (such as an artificial intelligence dialogue in any scenario, such as a question and answer scenario), the user clicks any button, such as a play music button, or turns on/off an air conditioner button. In the present disclosure, scenarios involving a user touch operation during voice interaction with the user are all applicable.

In S12, whether the user operation instruction is executable during activation of a voice interaction function is determined. If yes, step S13 is performed.

In an embodiment, the voice interaction function is used to enable the voice interaction operation. In the present disclosure, the above voice interaction operation is enabled by invoking the voice interaction function.

In practical applications, it is required to determine whether the user operation instruction is executable during the activation of the voice interaction function. If yes, the user operation instruction is executed during the activation of the voice interaction function.

In order to determine whether the user operation instruction is executable during the activation of the voice interaction function, in the embodiment of the present disclosure, a function set is pre-configured based on simultaneous activated requirements of functions.

The function set includes a subset of functions that are not mutually exclusive and a subset of functions that are mutually exclusive. The subset of functions that are not mutually exclusive includes a function that is executable during the activation of the voice interaction function, and the subset of functions that are mutually exclusive includes a function that is not executable during the activation of the voice interaction function.

In practical applications, Table 1 and Table 2 are referred to. Table 1 is an example of functions that are not mutually exclusive in the subset of functions that are not mutually exclusive, and Table 2 is an example of functions that are mutually exclusive in the subset of functions that are mutually exclusive. If a user interface is changed later or a function is added or deleted from the map, the contents in Table 1 and Table 2 would be adjusted accordingly.

**Table 1**

| **Map state** | **Does not affect voice dialogue** |
|---|---|
| Main Map State | Road condition |
| | Floor switch |
| | View switch |
| | Mute |
| | Zoom in/out |
| | Two-finger zoom in/out |
| | Drag to move map |
| Navigation State | Overview |
| | Road condition |
| | View switch |
| | Broadcast mode |
| | Parallel road switch |
| | Zoom in/out |
| | Two-finger zoom in/out |
| | Drag to move map |

Still taking the navigation scenario as an example, in Table 1 and Table 2, examples of some functions are listed. In Table 1, based on different map states, it is divided into a main map state and a navigation state. In each state, there are corresponding functions that do not affect the voice dialogue. In this embodiment, not affecting the voice dialogue refers to being executable during the activation of the voice interaction function. These functions would form the subset of functions that are not mutually exclusive.

**Table 2**

| **Map state** | **Affects voice dialogue** | **Voice dialogue end timing** |
|---|---|---|
| Main Map State | Team formation | After click |
| | Return to parking spot | |
| | Pin point | |
| | Toolbox | |
| | Search entrance | |
| | Cloud control message (close, view route) | When displayed |
| Navigation State | Continue navigation | After click |
| | Team formation | |
| | Exit | |
| | Long press map | |
| | Click to pin point | |
| | Toolbox | |
| | Search along route | |
| | Parking lot guidance | |
| | Route refresh | |
| | Highway board | When displayed |
| | Cloud control message (close, details) | |

In Table 2, similar to Table 1, based on different map states, it is divided into a main map state and a navigation state. In each state, there are corresponding functions that affect the voice dialogue. In this embodiment, affecting the voice dialogue refers to not being executable during the activation of the voice interaction function. These functions would form the subset of functions that are mutually exclusive.

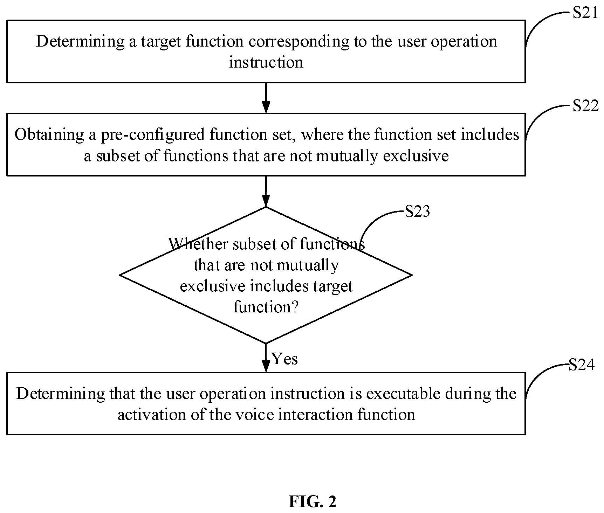

In this embodiment, determining whether the user operation instruction is executable during the activation of the voice interaction function, referring to FIG. 2, may specifically include the following steps.

In S21, a target function corresponding to the user operation instruction is determined.

In an embodiment, for each click operation of the user, the function corresponding to the user operation instruction would be invoked. Table 1 is taken as an example. If the "Floor switch" button is clicked, the "Floor switch" function is invoked. In this embodiment, based on the specific content of the user operation instruction, its corresponding target function is determined.

In S22, a pre-configured function set is obtained.

The function set includes a subset of functions that are not mutually exclusive and a subset of functions that are mutually exclusive. The subset of functions that are not mutually exclusive includes a function that is executable during the activation of the voice interaction function, and the subset of functions that are mutually exclusive includes a function that is not executable during the activation of the voice interaction function.

Specific explanations of the function set may be referred to the corresponding description above.

In S23, whether the subset of functions that are not mutually exclusive includes the target function is determined. If yes, step S24 is performed.

In S24, it is determined that the user operation instruction is executable during the activation of the voice interaction function.

In this embodiment, if the target function is included in the subset of functions that are not mutually exclusive, it is considered that the target function is not mutually exclusive with the voice interaction function, and the target function is executable during the activation of the voice interaction function. If the target function is included in the subset of functions that are mutually exclusive, it is considered that the target function is mutually exclusive with the voice interaction function, and the target function is not executable during the activation of the voice interaction function. That is, in response to the subset of functions that are mutually exclusive including the target function corresponding to the user operation instruction, the user operation instruction is determined to be not executable during the activation of the voice interaction function.

The functions in the subset of functions that are not mutually exclusive and the subset of functions that are mutually exclusive may be adjusted based on requirements, such as adding or deleting some functions in the subsets. A function in the subset of functions that are not mutually exclusive may be adjusted to the subset of functions that are mutually exclusive, and a function in the subset of functions that are mutually exclusive may also be adjusted to the subset of functions that are not mutually exclusive, which may be specifically configured based on actual needs.

In S13, a target operation corresponding to the user operation instruction is performed as a response to the user operation instruction.

If the target function corresponding to the user operation instruction is executable during the activation of the voice interaction function, the target operation corresponding to the user operation instruction would be performed as the response to the user operation instruction. For example, if the user clicks the "Zoom in/out" operation, the "Zoom in/out" function is invoked to zoom in or out of the map. If the user clicks the "Drag to move map" operation, the "Drag to move map" function is invoked to drag and move the map.

In practical applications, during the voice interaction, a display interface of the electronic device may display the content of the user's voice interaction. If the user clicks another operation, such as the "Drag to move map" operation, a drag interface of the map needs to be displayed at this time. In order to prevent the voice interaction content from affecting the display effect and display space of the "Drag to move map" operation, in this embodiment, after determining that the target function corresponding to the user operation instruction is executable during the activation of the voice interaction function, and before performing step S13, adjustment may be performed on attribute information of a display box for voice interaction. The attribute information in this embodiment mainly refers to size and position.

In detail, clicking the "Drag to move map" operation during the voice interaction is taken as an example. Since the "Drag to move map" function needs to be invoked to drag and move the map, the drag effect of the map needs to be displayed on the display interface. If the display box for voice interaction is large, the display interface for dragging and moving the map would be small, which is not conducive for the user to view the map. Therefore, in this embodiment, the size of the display box for voice interaction would be adjusted. Generally, the display box for voice interaction would be zoomed out, for example, to a specified size, which may be, for example, 2 cm*2 cm.

In addition, in order to prevent the display position of the display box for voice interaction from blocking or affecting the display effect of dragging and moving the map, in this embodiment, the display position of the resized display box for voice interaction would also be adjusted to a specified display position.

The specified display position is generally a position that does not affect the performing of the target operation, such as an upper left corner status bar.

In this embodiment, by zooming out the display box for voice interaction and adjusting its position to the specified display position, sufficient display space may be ensured when performing the target operation, thereby improving user experience.

In S14, an operating state of the voice interaction function is switched to a delayed listening state.

In practical applications, when performing the voice interaction operation, the user operation instruction is received. If it is determined through the above steps that the user operation instruction is executable, the target operation corresponding to the user operation instruction is performed. At this time, the voice dialogue and a voice list are not affected and are maintained in the current state.

In order to ensure that the user voice instruction is responded to in time when the user outputs voice, the operating state of the voice interaction function may be switched to a delayed listening state.

The delayed listening state in this embodiment refers to continuing to monitor the user voice. If a user voice instruction is received within the preset delayed listening time, the user voice instruction is responded to. If the user voice instruction is not received within the preset delayed listening time, the voice interaction function is deactivated. The preset delayed listening time may be configured based on actual conditions, such as 30 seconds.

In practical applications, multiple operating states of the voice interaction function are pre-configured, such as a normal operating state, an abnormal operating state and a delayed listening state. Each state has corresponding identifier. For example, 1 is used to identify the normal operating state, 2 is used to identify the abnormal operating state, and 3 is used to identify the delayed listening state.

Therefore, in this embodiment, the identifier corresponding to the delayed listening state may be obtained, and then operating state content of the voice interaction function is adjusted to the identifier corresponding to the delayed listening state, to switch the state.

In addition to using the delayed listening state, the operating state of the voice interaction function may also be configured as the normal operating state, where a countdown timer is set. If the user voice is received before the countdown timer expires a specified time (which may be the same as the preset delayed listening time), it is responded to. If no user voice is received, the voice interaction function is deactivated.

In addition, there is no order restriction between the step S13 and step S14. They can be performed simultaneously, or step S13 can be performed first and then step S14, or step S14 can be performed first and then step S13.

In S15, whether a user voice instruction is received within a preset delayed listening time is determined after the operating state of the voice interaction function is switched to the delayed listening state. If yes, step S16 is performed. If not, step S17 is performed.

Since in the delayed listening state, the user voice instruction is only supported to be responded to within the preset delayed listening time, in this embodiment, it is required to determine whether a user voice instruction is received within the preset delayed listening time after successfully switching to the delayed listening state.

At this time, within the preset delayed listening time, user voice may be collected, and then intent recognition is performed on the user voice.

In detail, the user voice is subjected to a voice recognition operation to obtain corresponding text information. Then a keyword extraction operation is performed on the text information, and intent recognition is performed based on the extracted keywords to obtain an intent recognition result.

For example, the user voice is "Help me switch the navigation route". After converting it into text information, keywords "switch" and "navigation route" are extracted. The keywords are used for intent recognition, and it is obtained that the intent of the user is to switch the navigation route.

If a preset intent recognition result is recognized, it is determined that the user voice instruction is received. The preset intent recognition result in this embodiment may be set as an intent recognition result related to a map function, such as the above switching of the navigation route.

In practical applications, if the switch to the delayed listening state is not successful, a retry switch may be attempted. If after multiple retries, the switch to the delayed listening state is still unsuccessful, the voice interaction function is deactivated, and the user is prompted that the voice interaction function is faulty and temporarily unavailable.

In S16, the voice interaction operation is performed as a response to the user voice instruction.

In an embodiment, an operation corresponding to the intent recognition result is performed. For example, the user voice is "Help me switch the navigation route". At this time, all available routes may be displayed on the interface, and the user is prompted by voice of "There are currently X routes, please choose which one to use".

The user may output the chosen route by voice, and then this route is used for the navigation operation.

In S17, a function exit operation that deactivates the voice interaction function is performed.

In an embodiment, if no user voice is received within the preset delayed listening time, it indicates that the user has no voice interaction demand currently. At this time, the function exit operation that deactivates the voice interaction function is performed to avoid memory consuming due to operating the function.

The present disclosure provides a method and an apparatus for instruction processing, and an electronic device. In the present disclosure, in response to receiving a user operation instruction during a voice interaction operation, whether the user operation instruction is executable during activation of a voice interaction function is determined. In response to determining that the user operation instruction is executable during the activation of the voice interaction function, it indicates that the user operation and the voice interaction can be executed simultaneously. Then, a target operation corresponding to the user operation instruction is performed as a response to the user operation instruction. An operating state of the voice interaction function is switched to a delayed listening state. Whether a user voice instruction is received within a preset delayed listening time is determined after the operating state of the voice interaction function is switched to the delayed listening state. In response to receiving the user voice instruction within the preset delayed listening time, the voice interaction operation is performed as a response to the user voice instruction. That is, through the present disclosure, if a voice interaction operation and another user operation exist simultaneously, in response to the two operations being executable simultaneously, the two operations are executed simultaneously, which improves user experience. Further, if the user voice instruction is not received within the preset delayed listening time, it indicates that the user no longer needs the voice interaction operation. At this time, a function exit operation that deactivates the voice interaction function is performed, thereby releasing resources occupied by the voice interaction function, avoiding a situation where other operations cannot be correctly executed due to a lack of resources caused by the occupation of resources by the voice interaction function, and improving user experience.

In addition, in the embodiment of the present disclosure, when a conflict occurs between the voice interaction and the touch interaction, a problem that the electronic device cannot correctly respond to the user operation due to the conflict between the voice interaction and the touch interaction is avoided, the user experience when the voice interaction and the touch interaction are used simultaneously is reasonably balanced, and the user is allowed to conveniently perform dual-operation interaction.

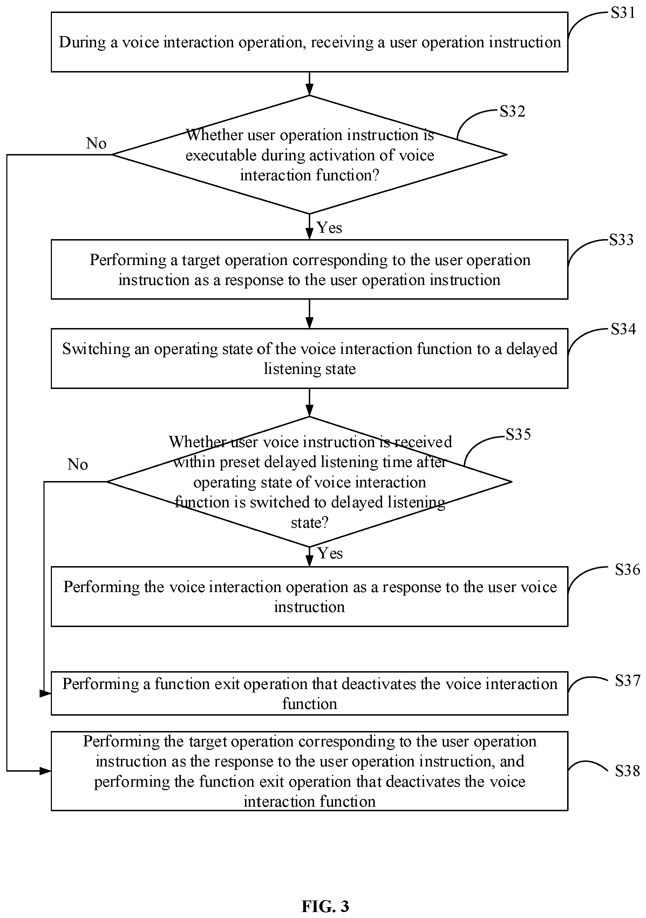

Based on the above content, in response to the subset of functions that are mutually exclusive including a target function corresponding to the user operation instruction, it is determined that the user operation instruction is not executable during the activation of the voice interaction function. Referring to FIG. 3, the method further includes the following steps in response to determining that the user operation instruction is not executable during the activation of the voice interaction function.

In S38, the target operation corresponding to the user operation instruction is performed as the response to the user operation instruction, and the function exit operation that deactivates the voice interaction function is performed.

In this embodiment, performing the target operation corresponding to the user operation instruction as the response to the user operation instruction may be referred to the corresponding description above.

The step of performing the function exit operation that deactivates the voice interaction function in this step has different implementations for different target operations, and are introduced separately now.

Referring to Table 2, the subset of functions that are mutually exclusive includes a function that is not executable during the activation of the voice interaction function.

In detail, the subset of functions that are mutually exclusive includes a first control function and a first message function when the map state is the main map state, and includes a second control function and a second message function when the map state is the navigation state.

In Table 2, the first control function includes several functions: team formation, return to parking spot, pin point, toolbox and search entrance. The first message function includes a function being the cloud control message (close, view route). The second control function includes several functions: continue navigation, team formation, exit, long press map, click to pin point, toolbox, search along route, parking lot guidance and route refresh. The second message function includes two functions: highway board and cloud control message (close, details).

Based on different types of the functions, during the voice dialogue, when a touch operation is received, the end timing of the voice dialogue differs. For example, the end timing for the first control function and the second control function is "After click". In an embodiment, "After click" means after the user operation instruction is received. That is, in response to the target function corresponding to the user operation instruction being the first control function or the second control function, after receiving the user operation instruction, the function exit operation that deactivates the voice interaction function is performed. Performing the function exit operation that deactivates the voice interaction function may be, for example, exiting a voice multi-turn dialogue, exiting a voice list display, etc.

The end timing for the first message function and the second message function is "When displayed". "When displayed" means when using the first message function or the second message function for message display. That is, in response to the target function corresponding to the user operation instruction being the first message function or the second message function, when using the first message function or the second message function for message display, the function exit operation that deactivates the voice interaction function is performed.

In this embodiment, two different end timings are set to ensure the normal operation of the target function in different function performing scenarios.

The specific implementation of steps S31 to S37 in this embodiment may be referred to the corresponding description above.

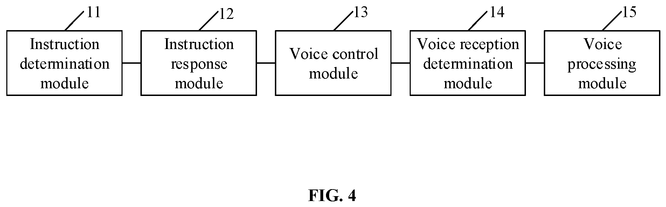

Based on the above embodiment of the method for instruction processing, another embodiment of the present disclosure provides an apparatus for instruction processing. Referring to FIG. 4, the apparatus may include:
an instruction determination module 11, configured to determine, in response to receiving a user operation instruction during a voice interaction operation, whether the user operation instruction is executable during activation of a voice interaction function, where the voice interaction function is used to enable the voice interaction operation;
an instruction response module 12, configured to, in response to determining that the user operation instruction is executable during the activation of the voice interaction function, perform a target operation corresponding to the user operation instruction as a response to the user operation instruction;
a voice control module 13, configured to switch an operating state of the voice interaction function to a delayed listening state;
a voice reception determination module 14, configured to determine whether a user voice instruction is received within a preset delayed listening time after the operating state of the voice interaction function is switched to the delayed listening state; and
a voice processing module 15, configured to perform, in response to receiving the user voice instruction within the preset delayed listening time, the voice interaction operation as a response to the user voice instruction; and perform, in response to not receiving the user voice instruction within the preset delayed listening time, a function exit operation that deactivates the voice interaction function.

Further, the instruction determination module 11 includes:
a function determination submodule, configured to determine a target function corresponding to the user operation instruction;
a set acquisition submodule, configured to obtain a pre-configured function set, where the function set includes a subset of functions that are not mutually exclusive, where the subset of functions that are not mutually exclusive includes a function that is executable during the activation of the voice interaction function;
a judgement submodule, configured to determine whether the subset of functions that are not mutually exclusive includes the target function; and
a determination submodule, configured to determine, in response to the subset of functions that are not mutually exclusive including the target function, that the user operation instruction is executable during the activation of the voice interaction function.

Further, the apparatus further includes:
an operation processing module, configured to, in response to determining that the user operation instruction is not executable during the activation of the voice interaction function, perform the target operation corresponding to the user operation instruction as the response to the user operation instruction, and perform the function exit operation that deactivates the voice interaction function.

Further, a subset of functions that are mutually exclusive includes a function that is not executable during the activation of the voice interaction function; and
in response to the operation processing module being configured to determine that the user operation instruction is not executable during the activation of the voice interaction function, the operation processing module is specifically configured to:
determine, in response to the subset of functions that are mutually exclusive including a target function corresponding to the user operation instruction, that the user operation instruction is not executable during the activation of the voice interaction function.

Further, the apparatus further includes:
a display box adjustment module, configured to adjust attribute information of a display box for voice interaction.

Further, the display box adjustment module is specifically configured to:
resize the display box for voice interaction, and adjust a display position of the resized display box for voice interaction to a specified display position.

Further, the voice control module 13 is specifically configured to:
obtain an identifier representing the delayed listening state, and adjust content representing the operating state of the voice interaction function to be the identifier.

Further, in response to the voice reception determination module 14 being configured to determine whether the user voice instruction is received within the preset delayed listening time, it is specifically configured to:
collect, within the preset delayed listening time, user voice; perform intent recognition on the user voice; and determine, in response to a preset intent recognition result being obtained from the intent recognition, that the user voice instruction is received.

The present disclosure provides a method and an apparatus for instruction processing, and an electronic device. In the present disclosure, in response to receiving a user operation instruction during a voice interaction operation, whether the user operation instruction is executable during activation of a voice interaction function is determined. In response to determining that the user operation instruction is executable during the activation of the voice interaction function, it indicates that the user operation and the voice interaction can be executed simultaneously. Then, a target operation corresponding to the user operation instruction is performed as a response to the user operation instruction. An operating state of the voice interaction function is switched to a delayed listening state. Whether a user voice instruction is received within a preset delayed listening time is determined after the operating state of the voice interaction function is switched to the delayed listening state. In response to receiving the user voice instruction within the preset delayed listening time, the voice interaction operation is performed as a response to the user voice instruction. That is, through the present disclosure, if a voice interaction operation and another user operation exist simultaneously, in response to the two operations being executable simultaneously, the two operations are executed simultaneously, which improves user experience. Further, if the user voice instruction is not received within the preset delayed listening time, it indicates that the user no longer needs the voice interaction operation. At this time, a function exit operation that deactivates the voice interaction function is performed, thereby releasing resources occupied by the voice interaction function, avoiding a situation where other operations cannot be correctly executed due to a lack of resources caused by the occupation of resources by the voice interaction function, and improving user experience.

The specific implementation of each module in this embodiment may be referred to the corresponding description in the above embodiments, which would not be repeated here.

Based on the above embodiments of the method for instruction processing and apparatus, another embodiment of the present disclosure provides an electronic device, including: a memory and a processor,
where the memory is used to store a program; and
the processor invokes the program to perform the method for instruction processing described above.

The electronic device in this embodiment may be an in-vehicle multimedia head unit (HUT). In practical applications, a system composed of a cloud platform, a T-BOX (Telematics Box), an in-vehicle multimedia HUT, a mobile phone terminal, etc., may be configured to facilitate the user initiating navigation. The HUT mainly provides the implementation and display of functional effects, and the logical judgment and decision of instruction execution. The T-BOX provides a network channel for communication between the cloud platform and the HUT. The cloud platform mainly performs instruction parsing, intent delivery, and replies after decisions are made. For example, when obtaining or updating map data, the HUT outputs a map data acquisition or update instruction, which is output to the cloud platform through the T-BOX. The cloud platform outputs the latest map data to the HUT through the T-BOX, and the HUT forwards it to the map module for updating.

Modules such as a map may also perform corresponding instructions and reflect them on an HMI (Human Machine Interface). For example, the navigation route is displayed through the HMI.

The present disclosure provides a method and an apparatus for instruction processing, and an electronic device. In the present disclosure, in response to receiving a user operation instruction during a voice interaction operation, whether the user operation instruction is executable during activation of a voice interaction function is determined. In response to determining that the user operation instruction is executable during the activation of the voice interaction function, it indicates that the user operation and the voice interaction can be executed simultaneously. Then, a target operation corresponding to the user operation instruction is performed as a response to the user operation instruction. An operating state of the voice interaction function is switched to a delayed listening state. Whether a user voice instruction is received within a preset delayed listening time is determined after the operating state of the voice interaction function is switched to the delayed listening state. In response to receiving the user voice instruction within the preset delayed listening time, the voice interaction operation is performed as a response to the user voice instruction. That is, through the present disclosure, if a voice interaction operation and another user operation exist simultaneously, in response to the two operations being executable simultaneously, the two operations are executed simultaneously, which improves user experience. Further, if the user voice instruction is not received within the preset delayed listening time, it indicates that the user no longer needs the voice interaction operation. At this time, a function exit operation that deactivates the voice interaction function is performed, thereby releasing resources occupied by the voice interaction function, avoiding a situation where other operations cannot be correctly executed due to a lack of resources caused by the occupation of resources by the voice interaction function, and improving user experience.

The above description of the disclosed embodiments enables those skilled in the art to implement or use the present disclosure. Various modifications to these embodiments would be apparent to those skilled in the art, and the general principles defined herein may be implemented in other embodiments without departing from the spirit or scope of the present disclosure. Therefore, the present disclosure would not be limited to the embodiments shown herein but shall conform to the widest scope consistent with the principles and novel features disclosed herein.

## Claims

1. A method for instruction processing, comprising:
determining, in response to receiving a user operation instruction during a voice interaction operation, whether the user operation instruction is executable during activation of a voice interaction function, wherein the voice interaction function is used to enable the voice interaction operation;
in response to determining that the user operation instruction is executable during the activation of the voice interaction function, performing a target operation corresponding to the user operation instruction as a response to the user operation instruction;
switching an operating state of the voice interaction function to a delayed listening state;
determining whether a user voice instruction is received within a preset delayed listening time after the operating state of the voice interaction function is switched to the delayed listening state;
performing, in response to receiving the user voice instruction within the preset delayed listening time, the voice interaction operation as a response to the user voice instruction; and
performing, in response to not receiving the user voice instruction within the preset delayed listening time, a function exit operation that deactivates the voice interaction function.

2. The method according to claim 1, wherein determining whether the user operation instruction is executable during the activation of the voice interaction function comprises:
determining a target function corresponding to the user operation instruction;
obtaining a pre-configured function set, wherein the function set comprises a subset of functions that are not mutually exclusive, wherein the subset of functions that are not mutually exclusive comprises a function that is executable during the activation of the voice interaction function;
determining whether the subset of functions that are not mutually exclusive comprises the target function; and
determining, in response to the subset of functions that are not mutually exclusive comprising the target function, that the user operation instruction is executable during the activation of the voice interaction function.

3. The method according to claim 1, further comprising:
in response to determining that the user operation instruction is not executable during the activation of the voice interaction function:
performing the target operation corresponding to the user operation instruction as the response to the user operation instruction, and performing the function exit operation that deactivates the voice interaction function.

4. The method according to claim 3, wherein a subset of functions that are mutually exclusive comprises a function that is not executable during the activation of the voice interaction function; and
wherein determining that the user operation instruction is not executable during the activation of the voice interaction function comprises:
determining, in response to the subset of functions that are mutually exclusive comprising a target function corresponding to the user operation instruction, that the user operation instruction is not executable during the activation of the voice interaction function.

5. The method according to claim 1, wherein before performing the target operation corresponding to the user operation instruction as the response to the user operation instruction, the method further comprises:
adjusting attribute information of a display box for voice interaction.

6. The method according to claim 5, wherein adjusting the attribute information of the display box for voice interaction comprises:
resizing the display box for voice interaction; and
adjusting a display position of the resized display box for voice interaction to a specified display position.

7. The method according to claim 1, wherein switching the operating state of the voice interaction function to the delayed listening state comprises:
obtaining an identifier representing the delayed listening state; and
adjusting content representing the operating state of the voice interaction function to be the identifier.

8. The method according to claim 1, wherein determining whether the user voice instruction is received within the preset delayed listening time comprises:
collecting, within the preset delayed listening time, user voice;
performing intent recognition on the user voice; and
determining, in response to a preset intent recognition result being obtained from the intent recognition, that the user voice instruction is received.

9. An apparatus for instruction processing, comprising:
an instruction determination module, configured to determine, in response to receiving a user operation instruction during a voice interaction operation, whether the user operation instruction is executable during activation of a voice interaction function, wherein the voice interaction function is used to enable the voice interaction operation;
an instruction response module, configured to, in response to determining that the user operation instruction is executable during the activation of the voice interaction function, perform a target operation corresponding to the user operation instruction as a response to the user operation instruction;
a voice control module, configured to switch an operating state of the voice interaction function to a delayed listening state;
a voice reception determination module, configured to determine whether a user voice instruction is received within a preset delayed listening time after the operating state of the voice interaction function is switched to the delayed listening state; and
a voice processing module, configured to perform, in response to receiving the user voice instruction within the preset delayed listening time, the voice interaction operation as a response to the user voice instruction; and perform, in response to not receiving the user voice instruction within the preset delayed listening time, a function exit operation that deactivates the voice interaction function.

10. An electronic device, comprising: a memory and a processor,
wherein the memory is used to store a program; and
the processor invokes the program to perform the method for instruction processing according to any one of claims 1 to 8.
